# FASCICULE DE BREVET EUROPEEN

(11) **EP 2 779 382 B1**
(45) Date de publication et mention de la délivrance du brevet: **22.01.2025**
(21) Numéro de dépôt: 14157936.7
(22) Date de dépôt: 05.03.2014
(51) Int. Cl.: H02K 15/04, H02K 15/06, H02K 3/28, H02K 3/487

(54) **Procédé de bobinage d'un rotor ou d'un stator d'une machine électrique tournante**
Wickelverfahren eines Rotors oder Stators einer rotierenden elektrischen Maschine
Winding method of a rotor or stator of a rotating electric machine

(30) Priorité: 11.03.2013 FR 1352142
(43) Date de publication de la demande: 17.09.2014
(73) Titulaire: Valeo Electrification, 95800 Cergy (FR)
(72) Inventeur: De-Clercq, Stéphane, 62180 RANG DU FLIERS (FR); Defebvin, Alain, 62630 CORMONT (FR); Darras, Ludovic, 62140 Huby-Saint-Leu (FR); Luittre, Olivier, 62170 BEAUMERIE SAINT MARTIN (FR); Ramet, Vincent, 62630 ETAPLES (FR); Dordain, Christophe, 62180 WABEN (FR); Leclercq, Sébastien, 62650 HUMBERT (FR)
(74) Mandataire: Valeo Powertrain Systems

(56) Documents cités:
- DE-A1- 10 305 199
- DE-A1- 19 708 089
- FR-A1- 2 896 350
- FR-A1- 2 896 352
- GB-A- 2 402 093
- JP-A- H 099 588

## Description

### DOMAINE TECHNIQUE DE L'INVENTION

L'invention porte sur un procédé de bobinage d'un rotor ou d'un stator d'une machine électrique tournante ainsi que sur l'outil de bobinage correspondant.

L'invention trouve une application particulièrement avantageuse pour le bobinage d'un rotor ou d'un stator d'une machine électrique tournante telle que par exemple un alternateur, un alterno-démarreur, voire un démarreur de véhicule automobile.

### ETAT DE LA TECHNIQUE

Une machine électrique comporte un rotor tournant à l'intérieur d'un stator suivant un axe principal. Le bobinage est réalisé généralement sur le rotor ou le stator à l'intérieur d'une pluralité d'encoches semi-fermées prévues à cet effet délimitées par des dents. Deux encoches consécutives sont ainsi séparées par une dent munie d'un pied de dent s'étendant circonférentiellement de part et d'autre de la dent.

Le bobinage est formé par K enroulements de phase correspondant chacun à une phase de la machine. Chaque enroulement de phase comprend un empilement de spires formées chacune par un conducteur continu de forme ondulée généralement en cuivre. Plus précisément, chaque conducteur comporte une série de brins axiaux insérés dans une série d'encoches correspondante et une série de brins transversaux formant des boucles positionnées alternativement de part et d'autre du stator ou du rotor reliant les brins axiaux entre eux.

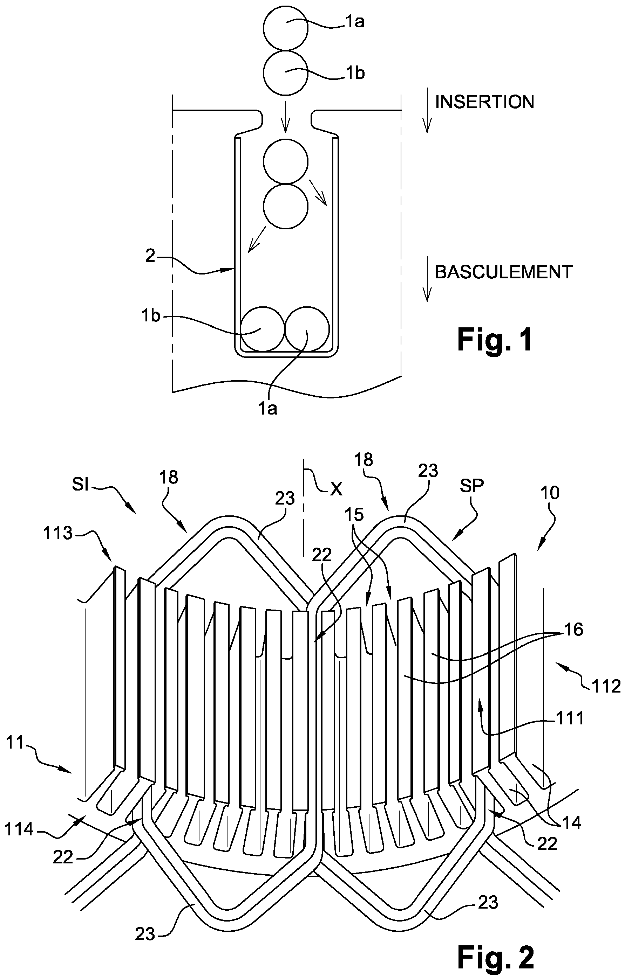

Dans le cas où chaque conducteur comporte par exemple une paire de fils, ces derniers sont positionnés côte à côte dans l'encoche pour maximiser le taux de remplissage. Or, l'écart entre deux pieds de dent consécutifs étant sensiblement égal au diamètre d'un fil, il n'est pas possible de positionner plusieurs fils côte à côte lors de l'entrée à l'intérieur de l'encoche entre les pieds de dent. La difficulté réside donc dans le fait de pouvoir passer dans un premier temps les fils 1a et 1b en position «debout», c'est-à-dire l'un derrière l'autre pour permettre le passage des pieds de dent pour ensuite les basculer à plat l'un à côté de l'autre suivant la largeur de l'encoche 2 pour venir se placer en fond d'encoche (cf figure 1).

Les documents FR2947968 et FR2968858 enseignent un procédé de bobinage dans lequel les fils sont insérés deux par deux dans les encoches et en parallèle pour chacun des enroulements de phase à réaliser. Le basculement résulte d'une part, d'un premier côté du stator, d'un mouvement de rotation du stator et de la forme donnée aux spires préalablement dans le cycle de bobinage et, du second côté du stator, d'une action mécanique suivant laquelle un outillage vient en contact avec un des fils (celui du haut sur la figure 1) de manière à le faire basculer à côté du fil du bas suivant la largeur de l'encoche.

Toutefois, un tel procédé ne permet pas de maîtriser le basculement des fils dans les encoches du stator dans la mesure où le basculement réalisé du premier côté du stator n'est pas répétable et engendre des croisements de fils dans les encoches. Ces croisements de fils empêchent l'insertion de la cale de fermeture d'encoche.

Les documents FR2896352, DE19708089, JPH099588, DE10305199, GB2402093 et FR2896350 décrivent chacun des procédés de bobinage de stator de machine électrique tournante.

### OBJET DE L'INVENTION

L'invention vise à remédier efficacement à cet inconvénient en proposant un procédé de bobinage d'un rotor ou un stator présentant un corps comportant K enroulements de phase constitués chacun de spires formées par un conducteur ondulé inséré dans des encoches séparées entre elles par des dents du corps munies à leur extrémité libre d'un pied de dent s'étendant de part et d'autre de chaque dent, caractérisé en ce qu'il comporte les étapes suivantes: - d'abord bobiner simultanément les enroulements de phase sur une broche présentant des rainures en insérant en parallèle les K conducteurs dans les séries de rainures correspondantes, le nombre des rainures étant égal au nombre d'encoches, chaque conducteur comportant une série de brins axiaux insérés dans une série de rainures correspondantes et une série de brins transversaux formant des boucles positionnées alternativement de part et d'autre de la broche reliant les brins axiaux entre eux, les brins axiaux étant insérés suivant leur plus petite dimension à l'intérieur des rainures de la broche, - puis positionner, par rotation des conducteurs, les brins transversaux à plat suivant leur plus grande dimension et les maintenir dans cette position pendant l'étape suivante consistant à transférer les brins axiaux depuis les séries de rainures de la broche vers des séries d'encoches du rotor ou du stator correspondantes de sorte que les brins axiaux basculent à l'intérieur des encoches après le passage des pieds de dent pour suivre la position des brins transversaux correspondants, de manière à passer d'une position dans laquelle les brins axiaux sont disposés suivant leur plus petite dimension dans les rainures de la broche à une position dans laquelle les brins axiaux sont disposés à plat suivant leur plus grande dimension suivant une largeur des encoches du rotor ou du stator.

Grâce à l'invention, on positionne les fils à plat dans les encoches de manière contrôlée, ce qui permet d'éviter les croisements de fils à l'intérieur des encoches et donc d'autoriser une insertion aisée des cales de fermeture d'encoche à la fin des opérations de bobinage.

Selon une de deux alternatives de l'invention, chaque conducteur comportant une paire de fils ronds et présentant chacun un diamètre légèrement inférieur à un écart entre deux pieds de dents successifs, il comporte l'étape de positionner les brins axiaux de chaque conducteur l'un derrière l'autre à l'intérieur de chaque rainure de la broche, et de positionner les brins transversaux de chaque conducteur l'un à côté de l'autre de sorte que les brins axiaux basculent à l'intérieur des encoches après le passage des pieds de dent pour suivre la position des brins transversaux correspondants, de manière à passer d'une position dans laquelle les brins axiaux de chaque conducteur se trouvent l'un derrière l'autre dans les rainures de la broche à une position dans laquelle les brins axiaux de chaque conducteur se trouvent à plat l'un à côté de l'autre suivant une largeur des encoches du rotor ou du stator.

Selon une mise en œuvre, pour positionner les brins transversaux de chaque conducteur l'un à côté de l'autre, il comporte l'étape de basculer un brin transversal d'un des fils d'un angle sensiblement égal à 90 degrés par rapport à la position que présente le brin axial correspondant dans la rainure. Selon une mise en œuvre, le conducteur comportant un premier et un deuxième fils, le premier fil est agencé axialement au-dessus du deuxième fil dans les spires impaires et axialement en dessous du deuxième fil dans les spires paires.

Selon une mise en œuvre, le conducteur comportant un premier et un deuxième fils, le premier fil est agencé axialement au-dessus du deuxième fil sur une face du stator et axialement encore au-dessus sur la seconde face du stator, pour les spires paires et/ou les spires impaires.

Selon une mise en œuvre, le premier fil est positionné radialement en dessous du deuxième fil à l'intérieur des rainures de la broche pour les spires paires et les spires impaires.

Selon une autre mise en œuvre, le premier fil est positionné radialement en dessous du deuxième fil à l'intérieur des rainures de la broche pour les spires paires et radialement au-dessus du deuxième fil à l'intérieur des rainures de la broche pour les spires impaires.

Selon une autre mise en œuvre, la broche comprend une face avant et une face arrière le premier fil est positionné radialement en dessous du deuxième fil à l'intérieur des rainures de la broche pour les brins axiaux dit montants allant de la face arrière vers la face avant et radialement au dessus du deuxième fil à l'intérieur des rainures de la broche pour les brins axiaux dit descendants allant de la face avant vers la face arrière.

Selon l'autre de deux alternatives de l'invention, le conducteur comporte un fil unique en forme de méplat comportant une plus grande dimension supérieure à un écart entre deux pieds de dent et une plus petite dimension légèrement inférieure audit écart.

Selon une mise en œuvre, le procédé comporte l'étape de modifier le sens de bobinage de la broche à chaque spire de sorte les boucles des spires impaires viennent se placer dans l'espace libre entre deux boucles d'une spire paire pour réaliser un bobinage ondulé réparti.

Selon une mise en œuvre, pour faciliter le refroidissement des chignons, les enroulements de phase sont réalisés de manière que les brins transversaux présentent une forme globalement pyramidale.

Selon une mise en œuvre, le procédé comporte l'étape d'insérer des cales de fermeture d'encoches à l'intérieur des encoches du stator après la réalisation du transfert des brins axiaux.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, montre une vue de dessus d'une encoche à l'intérieur de laquelle les fils d'une spire sont basculés pour être positionnés à plat dans le fond de l'encoche ;
La figure 2 montre une vue en perspective partielle d'un stator d'une machine électrique à bobiner en mettant en œuvre le procédé selon l'invention;
La figure 3 représente une projection linéaire de deux fils d'un conducteur d'un même enroulement de phase montrant les positions relatives des fils dans les spires impaires et paires de l'enroulement dans le stator;
Les figures 4a à 4g montrent des représentations schématiques de différentes étapes du procédé de bobinage de la broche;
La figure 5 montre une représentation schématique de spires d'un conducteur comportant deux fils situés à l'intérieur d'une rainure de la broche et dans les chignons correspondants;
La figure 6 représente une projection linaire de deux fils d'un conducteur d'un même enroulement de phase montrant les positions relatives des fils dans les spires impaires et les spires paires de l'enroulement dans la broche;
La figure 7 montre une représentation schématique du système d'extraction du bobinage depuis la broche vers le stator de la machine électrique utilisé dans le procédé selon l'invention;
La figure 8 est une représentation schématique de spires d'un conducteur comportant un fil unique en forme de méplat situé à l'intérieur d'une rainure de la broche et dans les chignons correspondants.

Les éléments identiques, similaires, ou analogues conservent la même référence d'une figure à l'autre.

### DESCRIPTION D'EXEMPLES DE REALISATION DE L'INVENTION

La figure 2 montre une vue partielle d'un stator 10 de machine électrique tournante pouvant être par exemple un alternateur ou un alterno-démarreur. Cette machine est de préférence destinée à être mise en œuvre dans un véhicule automobile. On rappelle qu'un alterno-démarreur est une machine électrique tournante apte à travailler de manière réversible, d'une part, comme générateur électrique en fonction alternateur, et d'autre part comme moteur électrique, notamment pour démarrer le moteur thermique du véhicule automobile.

Ce stator 10 comporte un corps 11 de forme cylindrique annulaire d'axe X consistant en un empilement axial de tôles planes. Le corps 11 de stator est délimité radialement par une face cylindrique interne 111 et par une face cylindrique externe 112. Le corps 11 est délimité axialement par une face radiale d'extrémité axiale supérieure 113 et une face radiale d'extrémité axiale inférieure 114.

Le stator 10 présente des dents 14 et des encoches 15, deux encoches 15 consécutives étant séparées par une dent 14. Les encoches 15 débouchent axialement dans les faces d'extrémité 113, 114 du corps 11. Les encoches 15 sont ouvertes radialement dans la face 111 cylindrique interne du corps 11. Les encoches 15 et les dents 14 sont toutes identiques et elles sont par exemple au nombre de 72. Elles sont réparties angulairement de manière régulière autour de l'axe X du corps. Des isolants sont disposés dans les encoches 15. Chaque dent 14 comporte du côté de son extrémité libre un pied 16 qui s'étend circonférentiellement de part et d'autre de la dent 14.

Des enroulements de phase E1-EK correspondant chacun à une des K phases de la machine électrique sont insérés dans les encoches 15. Chaque enroulement de phase E1-EK est constitué de spires SI, SP ondulées empilées radialement formées un conducteur 18 d'électricité. Chaque conducteur 18 comporte une série de brins axiaux 22 qui sont reçus dans une série d'encoches 15 associée et une série de brins transversaux 23 formant des boucles positionnées alternativement de part et d'autre du stator 10 reliant les brins axiaux 22 entre eux. Un ensemble de boucles d'un enroulement de phase forme un chignon du bobinage.

En l'occurrence, le conducteur 18 comporte deux fils 25a, 25b, chaque fil comportant une série de brin axiaux 22a, 22b et une série de brin transversaux 23a, 23b correspondants. En variante, le conducteur 18 comporte un seul ou plus de deux fils. Les fils 25a, 25b généralement en cuivre sont recouverts d'un émail pour leur isolation et présentent de préférence une section ronde. En variante, les fils 25a, 25b présentent une section rectangulaire ou en forme de méplat.

Chaque série d'encoches est associée à un des K enroulements de phase. Deux encoches 15 consécutives d'une série d'encoches sont séparées par des encoches adjacentes correspondant chacune à une autre série d'encoches associée à l'un des autres enroulements de phase. Autrement dit, pour un stator 10 comportant K enroulements de phase E1-EK les fils 25a, 25b d'un enroulement de phase E1-EK sont reçus dans une encoche sur K encoches adjacentes. Ainsi, pour un stator 10 comportant 6 enroulements de phase comme c'est le cas à la figure 2, cinq encoches 15 adjacentes sont laissées libres entre deux encoches 15 de chaque série. En d'autres termes, les fils 25a, 25b d'un enroulement de phase E1-EK sont insérés dans une encoche sur six encoches adjacentes. La machine peut par exemple avoir de 3 à 7 phases. Dans le cas d'une machine double triphasé ou simple hexaphasé, la machine comprend six phases et chaque phase comprend un enroulement de phase.

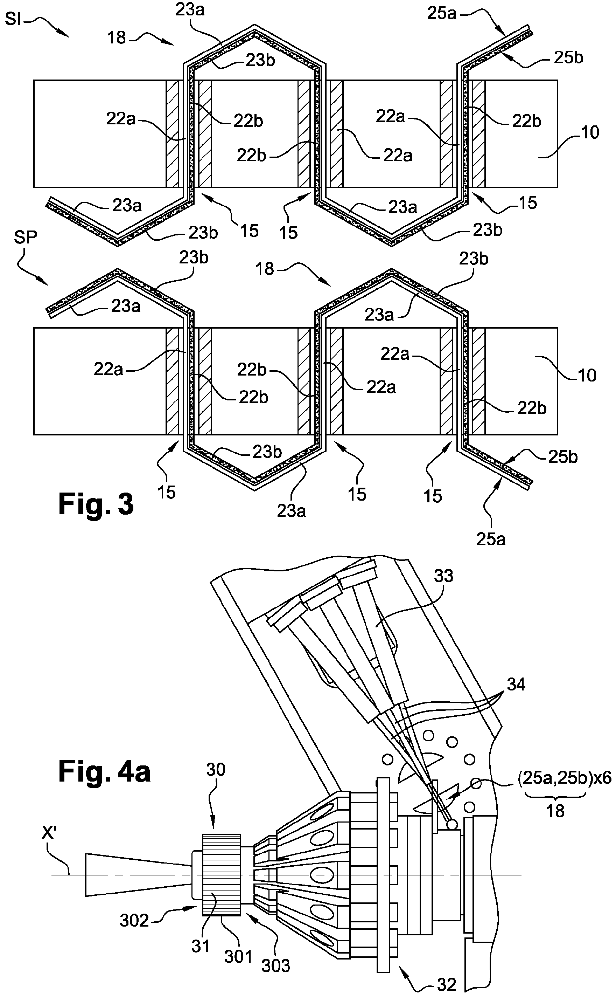

A l'intérieur des encoches 15, les brins axiaux 22a, 22b des fils sont positionnés à plat suivant la largeur de l'encoche 15. Deux spires d'un enroulement E1-EK ont été représentées sur la figure 2 mais il est clair que chaque enroulement E1-EK peut comporter plus de deux spires, ce nombre de spires étant par exemple égal à quatre ou six. Le bobinage est de préférence ondulé réparti, c'est-à-dire que les boucles des spires paires SP viennent se placer dans l'espace libre entre deux boucles d'une spire impaire SI, comme représenté sur la figure 3. Le bobinage sera ainsi symétrique. Plus précisément, pour deux encoches 15 adjacentes associées à un enroulement de phase Ei, les fils 25a, 25b formant une spire impaire SI comportent des brins transversaux 23a, 23b qui relient les brins axiaux 22a, 22b et sont agencés axialement au-dessus d'une face d'extrémité du corps 10; et les fils 25a, 25b formant une spire paire SP comportent des brins transversaux 23a, 23b qui relient les brins axiaux 22a, 22b reçus dans les deux encoches 15 adjacentes mentionnées précédemment et sont agencés axialement en dessous de ladite face d'extrémité du corps 10.

Par ailleurs, comme cela ressort de la figure 3, dans les spires impaires SI le premier fil 25a est agencé axialement au-dessus du deuxième fil 25b, et dans les spires paires SP, le premier fil 25a est agencé axialement en-dessous du deuxième fil 25b.

Par conséquent, dans les spires impaires SI, deux brins axiaux 22a du premier fil 25a qui sont reçus dans deux encoches 15 associées consécutives et qui sont reliés à un brin transversal supérieur 23a du premier fil 25a. sont agencés de part et d'autre des brins axiaux 22b du deuxième fil 25b qui sont reçus dans les deux mêmes encoches 15 associées consécutives et qui sont reliés au brin transversal supérieur 23b du deuxième fil 25b. Aussi, deux brins axiaux 22a du premier fil 25a qui sont reçus dans deux encoches 15 associées consécutives et qui sont reliés au brin transversal inférieur 23a du premier fil 25a, sont agencés entre les brins axiaux 22b du deuxième fil 25b qui sont reçus dans les deux mêmes encoches 15 associées consécutives et qui sont reliés au brin transversal inférieur 23b du deuxième fil 25b.

Dans les spires paires SP, deux brins axiaux 22b du deuxième fil 25b qui sont reçus dans deux encoches 15 associées consécutives et qui sont reliés à un brin transversal supérieur 23b du deuxième fil 25b, sont agencés de part et d'autre des brins axiaux 22a du premier fil 25a qui sont reçus dans les deux mêmes encoches 15 associées consécutives et qui sont reliés au brin transversal supérieur 23a du premier fil 25a. Aussi, deux brins axiaux 22b du deuxième fil 25b qui sont reçus dans deux encoches 15 associées consécutives et qui sont reliés au brin transversal inférieur 23b du deuxième fil 25b, sont agencés entre les brins axiaux 22a du premier fil 25a qui sont reçus dans les deux mêmes encoches 15 associées consécutives et qui sont reliés au brin transversal inférieur 23a du premier fil 25a.

On décrit ci-après le procédé permettant d'obtenir un stator 10 bobiné suivant la configuration précédemment décrite.

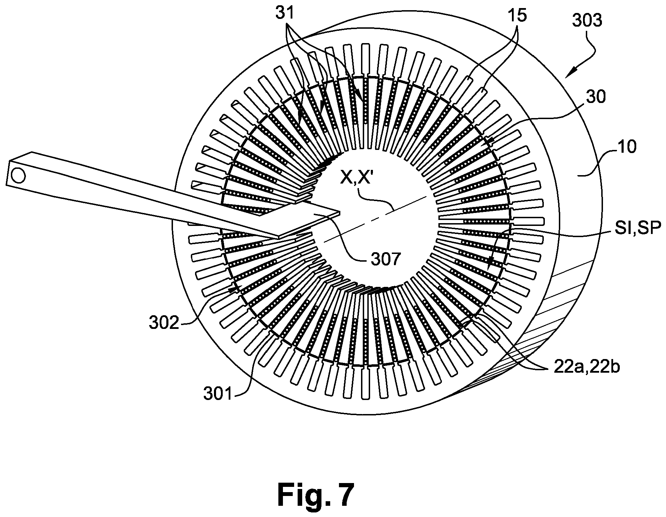

Ce bobinage est réalisé dans un premier temps en insérant en parallèle les enroulements de phase E1-EK sur une broche 30 visible sur les figures 4a-4f et 7 comportant des rainures 31 à cet effet, puis en transférant ces enroulements de phase E1-EK depuis la broche 30 vers le stator 10 tout en contrôlant le basculement des fils 25a, 25b des différents enroulements à l'intérieur des encoches 15 du stator 10 par mise en position des fils dans les chignons lors du bobinage de la broche 30.

Plus précisément, la broche 30 de forme cylindrique d'axe X' comporte des rainures 31 ménagées dans une face 301 annulaire externe de la broche 30. La broche 30 est délimitée axialement par une face 302 radiale d'extrémité avant et une face 303 radiale d'extrémité arrière située du côté de l'entrée des enroulements de phase E1-EK. La largeur de ces rainures 31 est sensiblement égale au diamètre d'un fil 25a, 25b. Le nombre de rainures 31 est égal au nombre d'encoches 15 du stator 10 à bobiner, soit par exemple égal à 72. La broche 30 présente un diamètre extérieur légèrement inférieur au diamètre intérieur du stator 10 de manière à pouvoir être entouré par le stator 10 lors des opérations de transfert (cf. figure 7). La broche 30 est montée sur un support 32 mobile en translation et en rotation par rapport à un dévidoir 33 de fils.

La broche 30 comporte également au moins une lame d'extraction 307 représentée schématiquement sur la figure 7 située à l'intérieur de chaque rainures 31 pour assurer le transfert des brins axiaux 22a, 22b du bobinage depuis des rainures 31 de la broche 30 vers les encoches 15 du stator 10. A cette fin, les lames d'extraction 307 sont mobiles dans les rainures 31 de la broche 30 de manière à pousser radialement vers l'extérieur les brins axiaux 22a, 22b du bobinage. Un tel système d'extraction pourra être semblable à celui décrit par exemple dans le document FR2896352. On se référera donc à ce document pour plus de détails sur la configuration du système d'extraction.

Le bobinage se compose de K x M fils du conducteur apportés par K buses 34 visibles sur les figures 4a à 4g, K correspondant au nombre d'enroulements de phase et M au nombre de fils en main. Ces buses 34 sont aptes à tourner sur elles-mêmes. En outre, le dévidoir 33 portant ces buses 34 est mobile en rotation autour de la broche 30. En l'occurrence, on utilise K=6 buses 34 amenant chacune une paire de fils (M=2) pour la réalisation d'un bobinage hexaphasé, soit 12 fils au total.

Le bobinage à réaliser sur la broche 30 correspond à celui du stator 10. Les enroulements E1-EK seront donc reçus dans des séries de rainures 31 correspondant aux séries d'encoches 15 du stator. A cet effet, les fils 25a, 25b sont accrochés au support 32 de la broche 30 du côté de la face 303 d'extrémité arrière au cours de l'étape représentée sur la figure 4a.

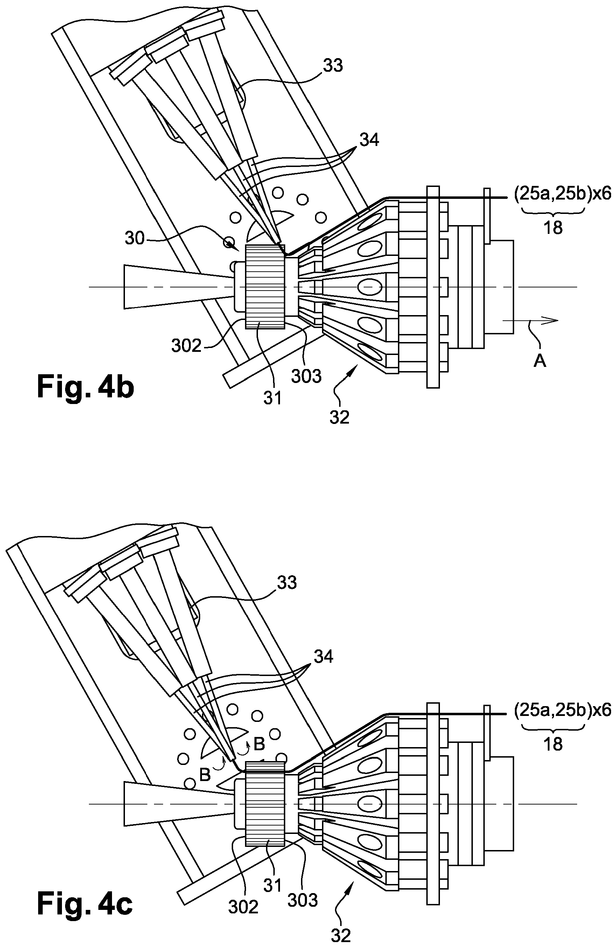

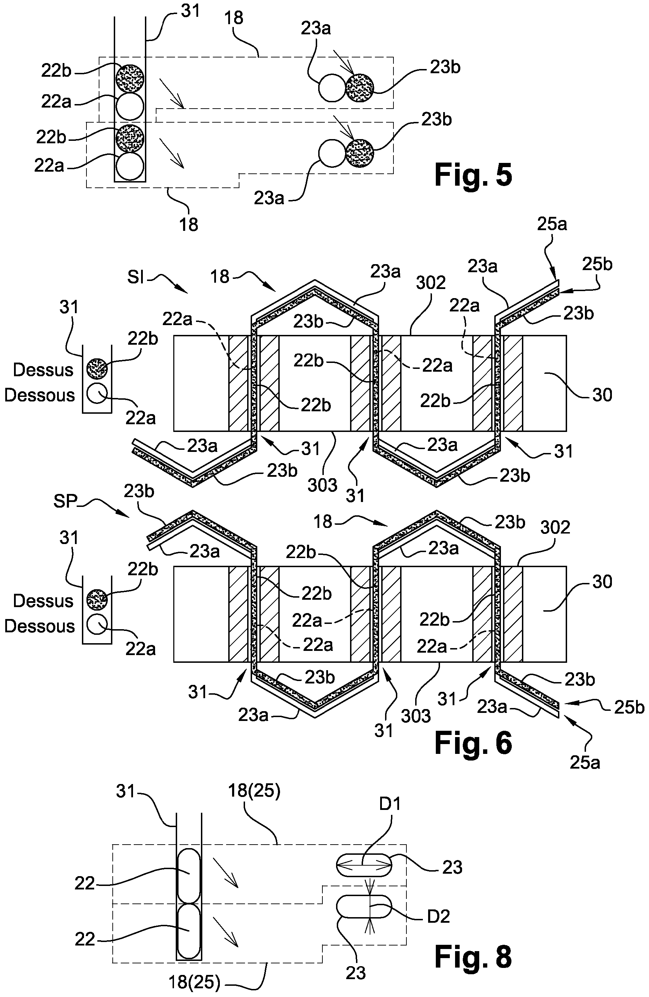

Puis, au cours de l'étape représentée à la figure 4b, le dévidoir 33 étant maintenu fixe, la broche 30 est déplacée en translation par son support 32 suivant la flèche A de manière à insérer simultanément et en parallèle chacun des ensembles de deux fils 25a, 25b dans les K rainures pour former des brins axiaux 22a, 22b. Ces brins axiaux 22a, 22b sont positionnés l'un derrière l'autre à l'intérieur des rainures 31 de le la broche 30, comme montré sur les figures 5 et 7.

Ensuite, au cours de l'étape représentée à la figure 4c, les buses 34 tournent sur elle-même d'un angle sensiblement égal à 90 degrés suivant les flèches B de sorte que les brins transversaux 23a, 23b situés du côté avant 302 de la broche 30 seront positionnés l'un à côté de l'autre dans les chignons des bobinages. Ainsi, comme visible sur la figure 5, un des brins transversaux 23b est décalé d'un angle sensiblement égal à 90 degrés par rapport à la position que présente le brin axial 22b correspondant dans la rainure 31.

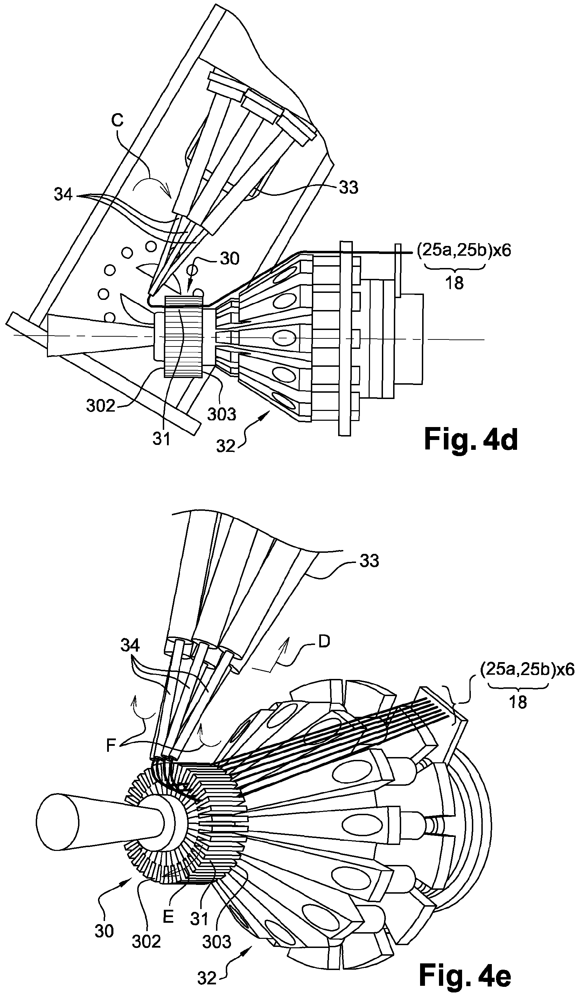

Au cours de l'étape représentée sur la figure 4d, le dévidoir 33 bascule suivant la flèche C. Au cours de l'étape représentée sur la figure 4e, le dévidoir 33 est remonté suivant la flèche D tandis que la broche 30 est mise en rotation autour de son axe X' suivant la flèche E sur un pas de bobinage, c'est-à-dire sur une portion angulaire correspondant à l'écart entre deux rainures 31 successives d'une série de rainures 31 destinées à recevoir un même enroulement du bobinage. On forme ainsi les brins transversaux 23a, 23b du côté avant de la broche 30. Ces brins transversaux 23a, 23b peuvent présenter une forme pyramidale, cela permet d'améliorer le refroidissement du chignon. Les buses 34 sont ensuite tournées sur elles-mêmes suivant la flèche F d'un angle égal sensiblement à 90 degrés opposé à l'angle B.

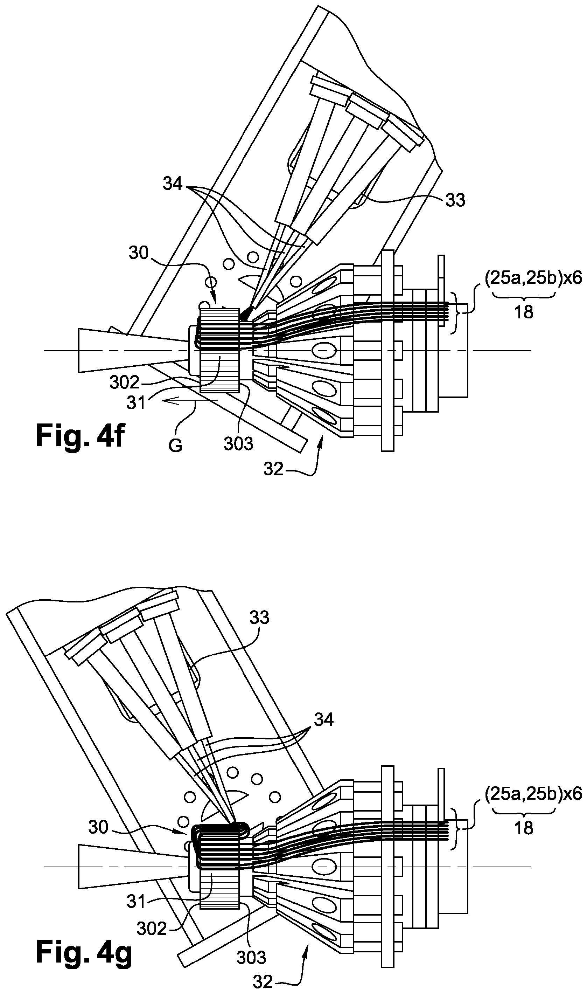

L'ensemble des KxM fils est positionné dans les K encoches suivantes par un déplacement en translation du support 32 de la broche 30 suivant la flèche G, le dévidoir 33 étant maintenu fixe (cf. figure 4f).

L'ensemble des opérations est répété pour former les brins transversaux du côté arrière 303 de la broche (cf. figure 4g) et ainsi de suite jusqu'au tour complet de la broche 30. Une fois qu'un tour, soit une spire SI, SP, a été réalisée, on inverse le sens de bobinage et l'orientation du bobinage, c'est-à-dire que les fils 25a, 25b sont bobinés en les basculant en sens inverse par rapport au sens précédent. L'inversion du bobinage est telle que les boucles des spires paires SP viennent se placer dans l'espace libre entre deux boucles d'une spire impaires SI, comme cela ressort clairement de la figure 6. Le bobinage sera ainsi symétrique.

En outre, on note que la gestion des longueurs des fils 25a, 25b pour le bobinage de la broche 30 est la même que celle du bobinage du stator 10, c'est-à-dire que dans les spires impaires SI, le premier fil 25a est agencé axialement au-dessus du deuxième fil 25b, et dans les spires paires SP, le premier fil 25a est agencé axialement au-dessous du deuxième fil 25b, tel que décrit précédemment. Ainsi, la longueur des deux fils 25a, 25b utilisés pour réaliser chaque enroulement de phase sera la même. Dans les deux cas, le premier fil 25a est positionné radialement en dessous du deuxième fil 25b à l'intérieur des rainures 31 de la broche 30 pour les spires impaires SI et les spires paires SP. Ainsi, le brin axial 22a du premier fil 25a est positionné en dessous du brin axial 22b du deuxième fil 25b pour les spires impaires SI et les spires paires SP, comme visible sur la figure 6.

De manière avantageuse, chaque buse 34 est configurée pour desservir chacun des deux fils 25a, 25b dans la broche de manière séparée. Ainsi, pour chacune des spires impaire et pair, on ajuste vitesse et longueur de fil donnée ce qui permet de gérer l'imbrication des paires des fils l'un par rapport à l'autre dans les portions dans la broche 30 puis dans le stator 10 par extension. Plus précisément, parmi les portions de fils telles qu'illustrées sur la figure 6 celles qui sont axialement à l'extérieur de la broche 30 (i.e. celles de dessus pour la partie avant de la broche et celles de dessous pour la partie arrière de la broche) et qui sont plus longues sont dévidées plus rapidement ce qui permet un positionnement axialement à l'extérieur plus aisé. De même, parmi les portions de fils telles qu'illustrées sur la figure 6 celles qui sont axialement à l'intérieur de la broche 30 (i.e. celles de dessous pour la partie avant de la broche et celles de dessus pour la partie arrière de la broche) et qui sont plus courte sont dévidées plus lentement ce qui permet un positionnement axialement à l'intérieur plus aisé.

Comme cela est montré sur la figure 7, une fois que les enroulements de phase E1-EK ont été réalisés sur la broche 30, la broche bobinée 30 est positionnée à l'intérieur du stator 10 de sorte que les axes X et X' sont confondus entre eux. Puis, les brins axiaux 22a, 22b sont transférés au moyen des lames d'extraction 307 de la broche 30 depuis les séries de rainures 31 de la broche 30 vers les séries d'encoches 15 du stator 10 correspondantes. Le transfert des brins axiaux 22a, 22b des enroulements de phase E1-EK est effectué d'une manière telle que les brins axiaux 22a, 22b basculent à l'intérieur des encoches 15 pour suivre la position des brins transversaux 23a, 23b correspondants des fils. Les brins axiaux 22a, 22b passent ainsi de la position dans laquelle ils se trouvent l'un derrière l'autre dans les rainures 31 de la broche 30 à une position dans laquelle ils se trouvent à plat l'un à côté de l'autre suivant la largeur des encoches 15 du stator 10. Dans chaque encoche 15, deux brins axiaux 22a, 22b d'une même spire se trouvent ainsi sensiblement à une même distance radiale par rapport à un axe du stator 10. La configuration est telle que le basculement des fils 25 se produit après le passage des pieds de dent 16. De préférence, pour faciliter le passage des fils 25, l'écart entre deux pieds de dent 16 adjacents est égal au plus grand diamètre du fil plus 0.3mm.

A la fin de l'étape de transfert, on obtient alors le bobinage du stator 10 précédemment décrit. De préférence, des cales de fermeture d'encoches sont insérées à l'intérieur de chaque encoche 15 pour éviter les déformations du corps des encoches 15.

Alternativement, comme montré sur la figure 8, chaque conducteur 18 d'un enroulement de phase E1-EK comporte un fil 25 unique en forme de méplat comportant une plus grande dimension D1 supérieure à un écart entre deux pieds de dent 16 et une plus petite dimension D2 légèrement inférieure audit écart. Lors du bobinage de la broche 30, le conducteur 18 est inséré à l'intérieur des rainures 31 qui présentent une largeur sensiblement égal à la plus petite dimension D2 du conducteur. Les brins transversaux 23 du conducteur 18 sont ensuite mis à plat dans les chignons suivant leur plus grande dimension D1. A cet effet, les brins transversaux 23 sont basculés d'un angle sensiblement égal à 90 degrés par rapport à la position que ces brins transversaux 23 occupent à l'intérieur des rainures 31. Ainsi, lors du transfert vers les encoches 15 du stator 10, les brins axiaux 22 du conducteur 18 pourront passer les pieds de dent 16 via la partie de plus petite dimension D2 du conducteur pour ensuite se positionner à plat en fond d'encoche 15 suivant la partie de plus grande dimension D1 du conducteur. En effet, comme précédemment, les brins axiaux 22 vont avoir tendance à suivre le positionnement des brins transversaux 23 lors du transfert.

Sur la figure 2, il apparaît que les formes d'onde dans le stator sont pyramidales, cela est du à une trajectoire relative des buses par rapport à la broche adaptée lors du bobinage dans la broche. Cela étant, toute autre forme d'onde est possible en modifiant la trajectoire des buses par rapport à la broche adaptée lors du bobinage dans la broche. Par exemple on peut prévoir des formes carrée ou arrondie. Il est également possible en contrôlant la trajectoire relative des buses par rapport à la broche de faire varier la hauteur de chignon. Par exemple, on peut prévoir une hauteur de chignon qui varie en fonction de la face avant 302 ou de la face arrière 303 de la broche. On peut également prévoir une variation de la hauteur de chignon entre les spires paires et les spires impaires. Enfin, on peut faire varier la hauteur du chignon sur une seule spire en fonction de l'onde sur la broche. Par exemple une succession d'un couple de deux ondes, dans lequel une onde a une hauteur de chignon supérieure à celle de l'autre onde.

L'homme du métier pourra évidemment transposer la mise en œuvre du procédé de bobinage décrite ci-dessus pour un stator à un rotor. En effet, la différence réside uniquement dans la configuration des encoches qui, au lieu d'être ménagées dans une face annulaire interne du stator, sont réalisées dans une face annulaire externe du rotor.

## Revendications

1. Procédé de bobinage d'un rotor ou un stator (10) présentant un corps (11) et comportant K enroulements de phase (E1-EK) constitués chacun de spires (SI, SP) formées par un conducteur ondulé (18) inséré dans des encoches (15) séparées entre elles par des dents (14) du corps (11) munies à leur extrémité libre d'un pied de dent (16) s'étendant de part et d'autre de chaque dent (14), **caractérisé en ce qu'**il comporte les étapes suivantes:
- d'abord bobiner simultanément les enroulements de phase (E1-EK) sur une broche (30) présentant des rainures (31) en insérant en parallèle les K conducteurs (18) dans les séries de rainures (31) correspondantes , le nombre de rainures (31) étant égal au nombre d'encoches (15), chaque conducteur (18) comportant une série de brins axiaux (22) insérés dans une série de rainures (31) correspondantes et une série de brins transversaux (23) formant des boucles positionnées alternativement de part et d'autre de la broche (30) reliant les brins axiaux (22) entre eux, les brins axiaux (22) étant insérés suivant leur plus petite dimension à l'intérieur des rainures (31) de la broche,
- puis positionner, par rotation des conducteurs (18), les brins transversaux (23) à plat suivant leur plus grande dimension et les maintenir dans cette position pendant l'étape suivante consistant à transférer les brins axiaux (22) depuis les séries de rainures (31) de la broche (30) vers des séries d'encoches (15) du rotor ou du stator (10) correspondantes de sorte que les brins axiaux (22) basculent à l'intérieur des encoches (15) après le passage des pieds de dent (16) pour suivre la position des brins transversaux (23) correspondants, de manière à passer d'une position dans laquelle les brins axiaux (22) sont disposés suivant leur plus petite dimension dans les rainures (31) de la broche (30) à une position dans laquelle les brins axiaux (22) sont disposés à plat suivant leur plus grande dimension suivant une largeur des encoches (15) du rotor ou du stator (10),
et **en ce que en ce que** :
- chaque conducteur (18) comportant une paire de fils (25a, 25b) ronds et présentant chacun un diamètre légèrement inférieur à un écart entre deux pieds de dent (16) successifs, l'étape de positionner les brins axiaux (22a, 22b) de chaque conducteur l'un derrière l'autre à l'intérieur de chaque rainure (31) de la broche (30), et de positionner les brins transversaux (23a, 23b) de chaque conducteur l'un à côté de l'autre de sorte que les brins axiaux (22a, 22b) basculent à l'intérieur des encoches (15) après le passage des pieds de dent (16) pour suivre la position des brins transversaux (23a, 23b) correspondants, de manière à passer d'une position dans laquelle les brins axiaux (22a, 22b) de chaque conducteur se trouvent l'un derrière l'autre dans les rainures (31) de la broche (30) à une position dans laquelle les brins axiaux (22a, 22b) de chaque conducteur se trouvent à plat l'un à côté de l'autre suivant une largeur des encoches (15) du rotor ou du stator (10) ; ou
- chaque conducteur (18) comporte un fil unique (25) en forme de méplat comportant une plus grande dimension (D1) supérieure à un écart entre deux pieds de dent (16) et une plus petite dimension (D2) légèrement inférieure audit écart.

2. Procédé selon la revendication 1, **caractérisé en ce que** pour positionner les brins transversaux (23a, 23b) de chaque conducteur l'un à côté de l'autre, il comporte l'étape de basculer un brin transversal (23b) d'un des fils d'un angle sensiblement égal à 90 degrés par rapport à la position que présente le brin axial (22b) correspondant dans la rainure (31).

3. Procédé selon la revendication 1 ou 2, **caractérisé en ce que** le conducteur comportant un premier et un deuxième fils (25a, 25b), le premier fil (25a) est agencé axialement au-dessus du deuxième fil (25b) sur une face du stator et axialement encore au-dessus sur la seconde face du stator, pour les spires paires (SP) et/ou les spires impaires (SI).

4. Procédé selon l'une quelconque des revendications 1 à 3, **caractérisé en ce que** le conducteur (18) comportant un premier (25a) et un deuxième (25b) fils, le premier fil (25a) est agencé axialement au-dessus du deuxième fil (25b) dans les spires impaires (SI) et axialement en dessous du deuxième fil (25b) dans les spires paires (SP).

5. Procédé selon la revendication 4, **caractérisé en ce que** le premier fil (25a) est positionné radialement en dessous du deuxième fil (25b) à l'intérieur des rainures (31) de la broche (30) pour les spires paires (SP) et les spires impaires (SI).

6. Procédé selon la revendication 4, **caractérisé en ce que** le premier fil (25a) est positionné radialement en dessous du deuxième fil (25b) à l'intérieur des rainures (31) de la broche (30) pour les spires paires (SP) et radialement au-dessus du deuxième fil (25b) à l'intérieur des rainures (31) de la broche (30) pour les spires impaires (SI).

7. Procédé selon la revendication 4, **caractérisé en ce que** la broche (30) comprend une face avant (302) et une face arrière (303) le premier fil (25a) est positionné radialement en dessous du deuxième fil (25b) à l'intérieur des rainures de la broche pour les brins axiaux dit montants allant de la face arrière (303) vers la face avant (302) et radialement au dessus du deuxième fil (25b) à l'intérieur des rainures de la broche pour les brins axiaux dit descendants allant de la face avant (302) vers la face arrière (303).

8. Procédé selon l'une des revendications 1 à 7, **caractérisé en ce qu'**il comporte l'étape de modifier le sens de bobinage de la broche (30) à chaque spire (SI, SP) de sorte les boucles des spires impaires (SI) viennent se placer dans l'espace libre entre deux boucles d'une spire paire (SP) pour réaliser un bobinage ondulé réparti.

9. Procédé selon l'une des revendications 1 à 8, **caractérisé en ce que** les enroulements de phase (E1-EK) sont réalisés de manière que les brins transversaux (23) présentent une forme globalement pyramidale.

10. Procédé selon l'une des revendications 1 à 9, **caractérisé en ce qu'**il comporte l'étape d'insérer des cales de fermeture d'encoches à l'intérieur des encoches (15) du stator (10) après la réalisation du transfert des brins axiaux (22).

## Patentansprüche

1. Verfahren zum Bewickeln eines Rotors oder eines Stators (10), der einen Körper (11) aufweist und K Phasenwicklungen (E1-EK) umfasst, die jeweils aus Windungen (SI, SP) bestehen, die durch einen wellenförmigen Leiter (18) gebildet werden, der in Schlitze (15) eingeführt ist, die untereinander durch Zähne (14) des Körpers (11) getrennt sind, die an ihrem freien Ende mit einem Zahnfuß (16) versehen sind, der sich zu beiden Seiten jedes Zahns (14) erstreckt, **dadurch gekennzeichnet, dass** es die folgenden Schritte umfasst:
- zunächst, die Phasenwicklungen (E1-EK) gleichzeitig auf eine Spindel (30) zu wickeln, die Nuten (31) aufweist, indem die K Leiter (18) parallel in die entsprechenden Reihen aus Nuten (31) eingeführt werden, wobei die Anzahl von Nuten (31) gleich der Anzahl von Schlitzen (15) ist, wobei jeder Leiter (18) eine Reihe von axialen Abschnitten (22) umfasst, die in eine Reihe von entsprechenden Nuten (31) eingeführt sind, und eine Reihe von Querabschnitten (23), die Schlingen bilden, die abwechselnd zu beiden Seiten der Spindel (30) positioniert sind und die axialen Abschnitte (22) untereinander verbinden, wobei die axialen Abschnitte (22) entlang ihres kleinsten Maßes in die Nuten (31) der Spindel eingeführt werden,
- dann, durch Drehen der Leiter (18), die Querabschnitte (23) flach entlang ihres größten Maßes zu positionieren und sie in dieser Position während des folgenden Schritts zu halten, der darin besteht, die axialen Abschnitte (22) von den Reihen von Nuten (31) der Spindel (30) aus zu entsprechenden Reihen von Nuten (15) des Rotors oder des Stators (10) zu transferieren, so dass die axialen Abschnitte (22) in den Schlitzen (15) nach dem Passieren der Zahnfüße (16) umgelegt werden, um der Position der entsprechenden Querabschnitte (23) zu folgen, so dass sie von einer Position, in der die axialen Abschnitte (22) entlang ihres kleinsten Maßes in den Nuten (31) der Spindel (30) angeordnet sind, zu einer Position übergehen, in der die axialen Abschnitte (22) flach entlang ihres größten Maßes entlang einer Breite der Schlitze (15) des Rotors oder des Stators (10) angeordnet sind,
und dadurch, dass:
- wenn jeder Leiter (18) ein Paar Drähte (25a, 25b) umfasst, die rund sind und jeweils einen Durchmesser aufweisen, der geringfügig kleiner als ein Abstand zwischen zwei aufeinanderfolgenden Zahnfüßen (16) ist, den Schritt, die axialen Abschnitte (22a, 22b) jedes Leiters hintereinander in jeder Nut (31) der Spindel (30) zu positionieren und die Querabschnitte (23a, 23b) jedes Leiters nebeneinander zu positionieren, so dass die axialen Abschnitte (22a, 22b) in den Schlitzen (15) nach dem Passieren der Zahnfüße (16) umgelegt werden, um der Position der entsprechenden Querabschnitte (23a, 23b) zu folgen, so dass sie von einer Position, in der sich die axialen Abschnitte (22a, 22b) jedes Leiters hintereinander in den Nuten (31) der Spindel (30) befinden, in eine Position übergehen, in der sich die axialen Abschnitte (22a, 22b) jedes Leiters flach nebeneinander entlang einer Breite der Schlitze (15) des Rotors oder des Stators (10) befinden; oder
- jeder Leiter (18) einen einzigen Draht (25) in Form eines Flachdrahts umfasst, der ein größtes Maß (D1) umfasst, das größer als ein Abstand zwischen zwei Zahnfüßen (16) ist, und ein kleinstes Maß (D2), das geringfügig kleiner als der Abstand ist.

2. Verfahren nach Anspruch 1, **dadurch gekennzeichnet, dass** es, um die Querabschnitte (23a, 23b) jedes Leiters nebeneinander zu positionieren, den Schritt umfasst, einen Querabschnitt (23b) eines der Drähte um einen Winkel von im Wesentlichen gleich 90 Grad in Bezug auf die Position umzulegen, die der entsprechende axiale Abschnitt (22b) in der Nut (31) aufweist.

3. Verfahren nach Anspruch 1 oder 2, **dadurch gekennzeichnet, dass**, wenn der Leiter einen ersten und einen zweiten Draht (25a, 25b) umfasst, der erste Draht (25a) axial über dem zweiten Draht (25b) auf einer Seite des Stators und axial nochmals darüber auf der zweiten Seite des Stators, bei den geraden Windungen (SP) und/oder den ungeraden Windungen (SI), angeordnet ist.

4. Verfahren nach einem der Ansprüche 1 bis 3, **dadurch gekennzeichnet, dass**, wenn der Leiter (18) einen ersten (25a) und einen zweiten (25b) Draht umfasst, der erste Draht (25a) axial über dem zweiten Draht (25b) in den ungeraden Windungen (SI) und axial unter dem zweiten Draht (25b) in den geraden Windungen (SP) angeordnet ist.

5. Verfahren nach Anspruch 4, **dadurch gekennzeichnet, dass** der erste Draht (25a) radial unter dem zweiten Draht (25b) in den Nuten (31) der Spindel (30) bei den geraden Windungen (SP) und den ungeraden Windungen (SI) positioniert ist.

6. Verfahren nach Anspruch 4, **dadurch gekennzeichnet, dass** der erste Draht (25a) radial unter dem zweiten Draht (25b) in den Nuten (31) der Spindel (30) bei den geraden Windungen (SP) und radial über dem zweiten Draht (25b) in den Nuten (31) der Spindel (30) bei den ungeraden Windungen (SI) positioniert ist.

7. Verfahren nach Anspruch 4, **dadurch gekennzeichnet, dass** die Spindel (30) eine Vorderseite (302) und eine Rückseite (303) umfasst, der erste Draht (25a) radial unter dem zweiten Draht (25b) in den Nuten der Spindel bei den sogenannten aufsteigenden axialen Abschnitten, die von der Rückseite (303) zu der Vorderseite (302) verlaufen, und radial über dem zweiten Draht (25b) in den Nuten der Spindel bei den sogenannten absteigenden axialen Abschnitten, die von der Vorderseite (302) zu der Rückseite (303) verlaufen, positioniert ist.

8. Verfahren nach einem der Ansprüche 1 bis 7, **dadurch gekennzeichnet, dass** es den Schritt umfasst, die Wickelrichtung der Spindel (30) bei jeder Windung (SI, SP) zu ändern, so dass die Schlingen der ungeraden Windungen (SI) in dem freien Raum zwischen zwei Schlingen einer geraden Windung (SP) zu liegen kommen, um eine verteilte wellenförmige Bewicklung auszuführen.

9. Verfahren nach einem der Ansprüche 1 bis 8, **dadurch gekennzeichnet, dass** die Phasenwicklungen (E1-EK) so ausgeführt sind, dass die Querabschnitte (23) eine insgesamt pyramidale Form aufweisen.

10. Verfahren nach einem der Ansprüche 1 bis 9, **dadurch gekennzeichnet, dass** es den Schritt umfasst, Nutenverschlusskeile in die Nuten (15) des Stators (10) nach dem Ausführen des Transfers der axialen Abschnitte (22) einzuführen.

## Claims

1. Method for winding a rotor or stator (10) having a body (11) and having K phase windings (E1-EK) each constituted of turns (SI, SP) formed by an undulating conductor (18) inserted into slots (15) separated from each other by teeth (14) of the body (11) that are provided at their free end with a tooth root (16) extending on either side of each tooth (14), **characterized in that** it involves the following steps:
- first, simultaneously winding the phase windings (E1-EK) on a pin (30) having grooves (31) by inserting the K conductors (18) in parallel into the corresponding series of grooves (31), the number of grooves (31) being equal to the number of slots (15), each conductor (18) having a series of axial strands (22) inserted into a series of corresponding grooves (31) and a series of transverse strands (23) forming loops positioned alternately on either side of the pin (30) connecting the axial strands (22) to each other, the axial strands (22) being inserted along their smallest dimension inside the grooves (31) of the pin,
- then, positioning, by rotating the conductors (18), the transverse strands (23) flat along their largest dimension and keeping them in this position during the following step consisting in transferring the axial strands (22) from the series of grooves (31) of the pin (30) to corresponding series of slots (15) of the rotor or stator (10) such that the axial strands (22) tilt inside the slots (15) after the passage of the tooth roots (16) to follow the position of the corresponding transverse strands (23), so as to pass from a position in which the axial strands (22) are disposed along their smallest dimension in the grooves (31) of the pin (30) to a position in which the axial strands (22) are disposed flat along their largest dimension along a width of the slots (15) of the rotor or stator (10),
and **in that in that**:
- each conductor (18) having a pair of round wires (25a, 25b) each having a diameter slightly smaller than a spacing between two successive tooth roots (16), the step of positioning the axial strands (22a, 22b) of each conductor one behind the other inside each groove (31) of the pin (30), and of positioning the transverse strands (23a, 23b) of each conductor next to one another such that the axial strands (22a, 22b) tilt inside the slots (15) after the passage of the tooth roots (16) to follow the position of the corresponding transverse strands (23a, 23b), so as to pass from a position in which the axial strands (22a, 22b) of each conductor are one behind the other in the grooves (31) of the pin (30) to a position in which the axial strands (22a, 22b) of each conductor are flat next to one another along a width of the slots (15) of the rotor or stator (10); or
- each conductor (18) has a single wire (25) in the form of a flat having a largest dimension (D1) greater than a spacing between two tooth roots (16) and a smallest dimension (D2) slightly smaller than said spacing.

2. Method according to Claim 1, **characterized in that**, to position the transverse strands (23a, 23b) of each conductor next to one another, it involves the step of tilting a transverse strand (23b) of one of the wires through an angle substantially equal to 90 degrees with respect to the position of the corresponding axial strand (22b) in the groove (31).

3. Method according to Claim 1 or 2, **characterized in that**, the conductor having a first and a second wire (25a, 25b), the first wire (25a) is arranged axially above the second wire (25b) on one face of the stator and axially again above on the second face of the stator, for the even turns (SP) and/or the odd turns (SI).

4. Method according to any one of Claims 1 to 3, **characterized in that**, the conductor (18) having a first (25a) and a second (25b) wire, the first wire (25a) is arranged axially above the second wire (25b) in the odd turns (SI) and axially below the second wire (25b) in the even turns (SP).

5. Method according to Claim 4, **characterized in that** the first wire (25a) is positioned radially below the second wire (25b) inside the grooves (31) of the pin (30) for the even turns (SP) and the odd turns (SI).

6. Method according to Claim 4, **characterized in that** the first wire (25a) is positioned radially below the second wire (25b) inside the grooves (31) of the pin (30) for the even turns (SP) and radially above the second wire (25b) inside the grooves (31) of the pin (30) for the odd turns (SI).

7. Method according to Claim 4, **characterized in that** the pin (30) comprises a front face (302) and a rear face (303), the first wire (25a) is positioned radially below the second wire (25b) inside the grooves of the pin for the axial strands referred to as rising, going from the rear face (303) towards the front face (302), and radially above the second wire (25b) inside the grooves of the pin for the axial strands referred to as descending, going from the front face (302) towards the rear face (303).

8. Method according to one of Claims 1 to 7, **characterized in that** it involves the step of modifying the winding direction of the pin (30) at each turn (SI, SP) such that the loops of the odd turns (SI) are placed in the free space between two loops of an even turn (SP) to realize a distributed undulating winding.

9. Method according to one of Claims 1 to 8, **characterized in that** the phase windings (E1-EK) are realized in such a way that the transverse strands (23) have a pyramidal overall shape.

10. Method according to one of Claims 1 to 9, **characterized in that** it involves the step of inserting slot closing wedges inside the slots (15) of the stator (10) after the transfer of the axial strands (22) has been realized.
